# FASCICULE DE BREVET EUROPEEN

(11) **EP 0 619 138 B1**
(45) Date de publication et mention de la délivrance du brevet: **15.07.1998**
(21) Numéro de dépôt: 94400775.6
(22) Date de dépôt: 11.04.1994
(51) Int. Cl.: B01J 4/00, B65D 88/56

(54) **Procédé de chargement et déchargement de catalyseur pulvérulent**
Verfahren zum Be- und Entladen von feinpulverigem Katalysator
Method of charging and discharging pulverulent catalyst

(30) Priorité: 09.04.1993 FR 9304358
(43) Date de publication de la demande: 12.10.1994
(73) Titulaire: EURECAT EUROPEENNE DE RETRAITEMENT DE CATALYSEURS, F-07800 La Voulte-sur-Rhône (FR)
(72) Inventeur: Berrebi, Georges, F-26500 Bourg Les Valences (FR); Jacquier, Yves, F-07500 Granges Les Valences (FR); Edens, Habbo, NL-2964 LA Groot-Ammers (NL); Middelkoop, Gerrit, NL-2964 BE Groot-Ammers (NL)
(74) Mandataire: Andreeff, François

(56) Documents cités:
- FR-A- 1 090 515
- FR-A- 2 645 567

## Description

La présente invention concerne l'utilisation de conteneurs (ou containers) particuliers pour la manipulation de produits pulvérulents qui présentent, pour leur manipulation, les caractéristiques suivantes : produits pyrophoriques, auto-comburants ou auto-échauffants. Les produits pulvérulents sont notamment des catalyseurs (en billes, extrudés ou pastilles ou sous toute autre forme équivalente) de convertion ou d'hydroconversion d'hydrocarbures c'est-à-dire des catalyseurs de raffinage, pétrochimie ou chimie. Ces produits peuvent également être des adsorbants. Les conteneurs décrits dans la présente invention permettent une manipulation aisée et sans danger pour les opérateurs et techniciens chargés de la manutention des catalyseurs. Ces conteneurs (ou containers) conviennent ainsi aussi bien aux chargements et/ou aux déchargements de catalyseurs qu'au stockage de ces catalyseurs et à leur transport dans des conditions de sécurité parfaite conformes notamment aux normes "classe 4-2 ONU".

Ces conteneurs sont ainsi avantageusement appelés à remplacer les fûts actuels qui posent des problèmes de recyclage, de manutention et de sécurité.

Un dispositif pour la manipulation d'enduits de lissage, colles ou analogues est connu de FR-A-2 645 567. Le dispositif comprend un chassis supportant un récipient Le récipient est monté basculant sur le chassis et le chassis comporte des moyens pour immobiliser le récipient, soit verticalement, soit en position basculé.

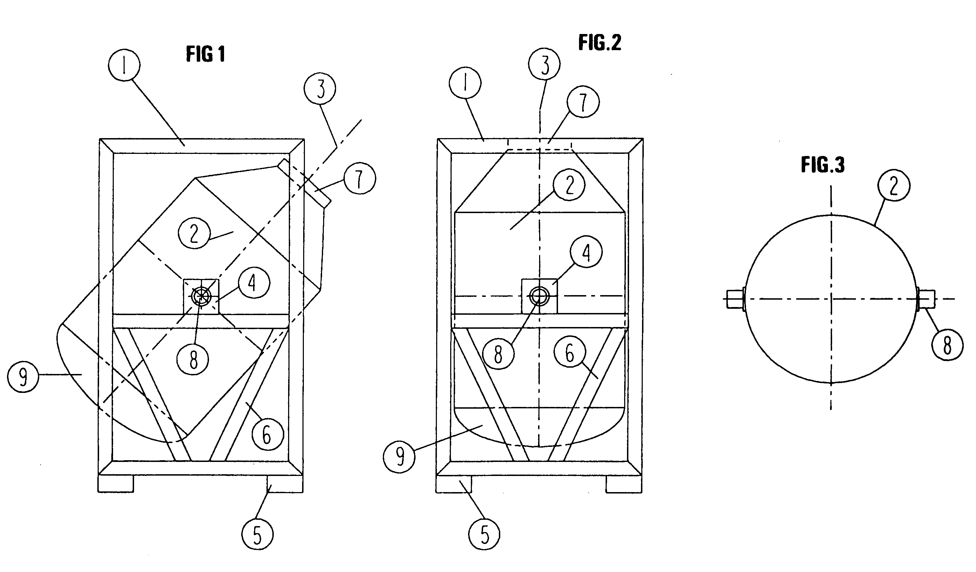

Les figures 1 à 3 illustrent l'appareil et le conteneur ou "container" qu'il contient et expliquent les caractéristiques de l'appareil utilisé selon l'invention.

L'appareil utilisé dans la présente invention (figure 1) comporte un châssis stable reposant, par exemple, sur les pieds (5) ou dispositifs équivalents tels que rails ou gouttières et muni de dispositifs de préhension à sa partie supérieure. Ce châssis est éventuellement renforcé par des jambages appropriés tels que (6). Il peut donc être manutentionné aisément à l'aide de chariots élévateurs ou de grues et être chargé et déplacé dans des camions, des bateaux ou des avions.

Le conteneur (2) proprement dit est enchâssé dans le châssis (1) (ou cadre métallique). Ce conteneur est de toute forme traditionnelle connue de l'homme du métier : cylindrique par exemple, ou sphérique, ou parallélipipédique. Le conteneur est muni d'un seul orifice (7) à sa partie haute et d'un fond plein (9); le remplissage et la vidange se font donc par ce même orifice. Cet orifice (7) est équipé d'une vanne parfaitement étanche, de préférence une vanne de type vanne à boule.

Le conteneur utilisé dans la présente invention a l'avantage d'améliorer considérablement la manipulation parce qu'il pivote sur lui-même pour sa vidange, grâce à son installation sur son cadre métallique. Ce pivotement se fait autour d'un axe horizontal (8) passant par le centre du conteneur et perpendiculairement à l'axe principal (3).

Grâce à un dispositif original, un basculement intempestif ou inopportun du conteneur pendant sa manipulation, sa vidange, son remplissage ou son stockage ne peut se produire.

Ce dispositif original (4) est un cliquet antiretour qui empêche le conteneur de se mouvoir de manière incontrôlée, en passant à une position plus basse lors d'un déchargement ou à une position plus haute lors d'un retour du conteneur à sa position haute.

Le conteneur ne peut donc pivoter qu'à la vitesse progressive souhaitée par l'opérateur responsable de la manutention du conteneur. Le dispositif (8) est semblable ou équivalent aux roues d'échappement des mécanismes d'horlogerie (montres, pendules, horloges, etc...) citées ici par voie de référence.

Le conteneur peut être équipé d'un manomètre indicateur de pression, d'un clapet de sécurité taré à une pression désirée, et/ou d'un dispositif d'injection d'azote ou autre gaz et de purge, équipé d'une vanne. Il est équipé d'un système de vanne adéquat qui permet de purger le conteneur lorsqu'il est vide (à l'azote par exemple).

Le conteneur est normalement réalisé en acier, inox ou non.

La conception du conteneur et la qualité de la vanne à boule permettent à ce conteneur de résister à une pression de quelques bars, par exemple 3 bars.

Ce conteneur permet de conditionner, de stocker, de transporter et de manipuler des catalyseurs ou des adsorbants sans atmosphère spécifique : azote, argon, vapeur d'eau, hydrogène, hydrocarbures gazeux comme le méthane, chlore, acide chlorhydrique, ou des mélanges de ces gaz. Il peut contenir des catalyseurs ou des adsorbants de divers types, par exemple des catalyseurs d'hydrotraitement usagés contenant du carbone et du soufre provenant des unités d'hydrotraitement de coupes pétrolières en raffinerie. Ces catalyseurs usés sont classés dans la catégorie des produits auto-échauffants de classe 4.2 selon la nomenclature ONU. Ils peuvent être partiellement passivés selon des technologies existantes comme celles utilisant des produits passivants de type NK103 ou CATNAP.

La figure 2 représente l'appareil avec un conteneur en position haute ou de repos (plein, vide et/ou en cours de transport).

La figure 3 représente le conteneur (2) en vue aérienne, pouvant pivoter autour de son axe horizontal (8) autour d'écrous (ou dispositif similaire).

Le conteneur peut avoir un volume utile de 0,1 à 12 m³, de préférence de 0,5 à 5 m³.

Il peut être conçu pour que ses dimensions permettent de le charger en conteneurs maritimes.

En résumé, l'invention concerne un procédé de transport, ou de chargement et de déchargement d'un catalyseur pulvérulent, au moyen d'une enceinte (destinée à contenir ledit catalyseur ou adsorbant pulvérulent) enchâssée dans un support stable, ledit support étant muni de pieds ou pouvant être déplacé le long d'un rail, d'une gouttière ou de tout moyen équivalent, ladite enceinte pouvant pivoter autour de son axe horizontal pour les opérations de chargement et de déchargement du catalyseur, le procédé étant caractérisé en ce que ladite enceinte (ou "conteneur") pivote par basculement contrôlé et progressif au moyen d'un cliquet antiretour apparenté à une roue d'échappement. L'enceinte est de type "container" de préférence métallique, par exemple en inox.

Le procédé s'applique au transport/stockage ou au chargement et déchargement de catalyseurs pyrophoriques ou au transport/stockage ou au chargement et déchargement de catalyseurs à caractère auto-comburant et/ou au transport/stockage ou au chargement et déchargement de catalyseurs à caractère auto-échauffant.

## Revendications

1. Procédé de transport ou de chargement et de déchargement d'un catalyseur ou adsorbant pulvérulent au moyen d'une enceinte (destinée à contenir ledit catalyseur ou adsorbant pulvérulent), ladite enceinte pouvant pivoter autour de son axe horizontal pour les opérations de chargement et de déchargement du catalyseur, le procédé étant caractérisé en ce que ladite enceinte pivote par basculement contrôlé au moyen d'un cliquet antiretour apparenté à une roue d'échappement.

2. Procédé selon la revendication 1 appliqué au transport ou au chargement et déchargement de catalyseurs pyrophoriques.

3. Procédé selon l'une des revendication 1 à 2 appliqué au transport ou au chargement et déchargement de catalyseurs à caractère auto-échauffant.

4. Procédé selon l'une des revendications 1 à 3 dans lequel ladite enceinte est à base d'un métal, de préférence en inox.

5. Procédé selon l'une des revendications 1 à 4 dans lequel ladite enceinte est équipée d'un seul orifice de remplissage équipé d'une vanne étanche.

6. Procédé selon l'une des revendications 1 à 5 dans lequel ladite enceinte peut être portée sous pression d'un gaz et est équipée d'un système de contrôle de pression.

7. Procédé selon l'une des revendications 1 à 6 dans lequel ladite enceinte est enchâssée dans un support stable, ledit support étant muni de pieds ou pouvant être déplacé le long d'un rail, d'une gouttière ou de tout moyen équivalent.

## Claims

1. A process for transport, or loading or unloading of a powder catalyst or adsorbent, by means of an enclosure (intended to contain said powder catalyst or adsorbent), said enclosure being able to pivot arount its horizontal axis for loading and unloading operations of the catalyst, the process being characterized in that said enclosure pivots by controlled rocking by means of a reverse-lock ratchet similar to an escape wheel.

2. A process according to claim 1 applied to the transport of to the loading and unloading of pyrophoric catalysts.

3. The process according to claim 1 or 2 applied to the transport or to the loading and unloading of catalysts having a self-heating characteristic.

4. A process according to anyone of claims 1 to 3, wherein said enclosure has a base of a metal preferably stainless steel.

5. A process according to anyone of claims 1 to 4, wherein said enclosure is equipped with a single filling opening equipped with a fluid-tight valve.

6. A process according to anyone of claims 1 to 5, wherein said enclosure can be brought under the pressure of a gas and is equipped with a pressure control system.

7. A process according to anyone of claims 1 to 6, wherein said enclosure is set in a stable support, said support being provided with feet or being able to be displaced along a rail, a channel or any other equivalent means.

## Patentansprüche

1. Verfahren zum Transport oder zur Aufgabe und zum Entladen eines pulverförmigen Katalysators oder Adsorptionsmittel mittels einer Kammer (die dazu bestimmt ist, diesen Katalysator oder das pulverförmige Adsorptionsmittel zu enthalten), wobei die Kammer um ihre horizontale Achse für die Vorgänge der Aufgabe und der Entladung des Katalysators verschwenken kann, und das Verfahren sich dadurch auszeichnet, daß diese Kammer durch geregeltes Verkippen mittels einer Rückschlagklinke, verwandt einem Hemmungsrad, verschwenkt.

2. Verfahren nach Anspruch 1, angewendet auf den Transport oder die Aufgabe und die Entleerung von pyrophoren Katalysatoren.

3. Verfahren nach einem der Ansprüche 1 bis 2, angewendet auf den Transport oder auf die Aufgabe und die Entleerung von Katalysatoren mit selbsterhitzendem Charakter.

4. Verfahren nach einem der Ansprüche 1 bis 3, bei dem diese Kammer auf Basis eines Metalls, bevorzugt aus rostfreiem Stahl, vorgesehen ist.

5. Verfahren nach einem der Ansprüche 1 bis 4, bei dem diese Kammer mit einer einzigen Füllöffnung, die mit einem dichten Ventil versehen ist, ausgestattet ist.

6. Verfahren nach einem der Ansprüche 1 bis 5, bei dem diese Kammer unter den Druck eines Gases gebracht werden kann und mit einem Druckregelsystem ausgestattet ist.

7. Verfahren nach einem der Ansprüche 1 bis 6, bei dem diese Kammer in einen stabilen Träger eingelassen bzw. eingesteckt ist, wobei dieser Träger mit Füßen versehen ist oder längs einer Schiene, einer Rinne oder irgendeinem äquivalenten Mittel verschoben werden kann.
